Europäisches Patentamt

European Patent Office

Office européen des brevets

(19)

(11) Veröffentlichungsnummer: **0 008 646**
B1

(12) **EUROPÄISCHE PATENTSCHRIFT**

(45) Veröffentlichungstag der Patentschrift:
20.01.82

(51) Int. Cl.³: **B 65 D  65/42,** B 65 D  81/24,
B 65 D  81/34, A 22 C  13/00

(21) Anmeldenummer: 79102509.1

(22) Anmeldetag: 18.07.79

(54) Cellulosehydratschlauch mit alterungsbeständiger Sperrschicht aus synthetischem Copolymerisat auf der Aussenseite sowie Verfahren zu seiner Herstellung und seine Verwendung.

(30) Priorität: 27.07.78 DE 2832926

(43) Veröffentlichungstag der Anmeldung:
19.03.80 Patentblatt 80/6

(45) Bekanntmachung des Hinweises auf die Patenterteilung:
20.01.82 Patentblatt 82/3

(84) Benannte Vertragsstaaten:
AT BE CH DE FR GB IT NL SE

(56) Entgegenhaltungen:
FR-A-2 305 290
US-A-2 961 323
US-A-3 353 991

(73) Patentinhaber: HOECHST AKTIENGESELLSCHAFT,
Postfach 80 03 20, D-6230 Frankfurt/Main 80 (DE)

(72) Erfinder: Schenk, Harald, Dr. Dipl.-Chem., Buchenweg 3,
D-6200 Wiesbaden (DE)
Erfinder: Winter, Hermann, Am Schlosspark 93,
D-6200 Wiesbaden (DE)
Erfinder: Spletschka, Walter, Dr. Dipl.-Chem.,
Zugspitzstrasse 33, D-6200 Wiesbaden (DE)

ACTORUM AG.

# Cellulosehydratschlauch mit alterungsbeständiger Sperrschicht aus synthetischem Copolymerisat auf der Aussenseite sowie Verfahren zu seiner Herstellung und seine Verwendung

Die Erfindung betrifft eine schlauchförmige Verpackungshülle von der im Oberbegriff des Anspruchs 1 genannten Art, ihre Verwendung und ein Verfahren zu ihrer Herstellung.

Es ist bekannt, Cellulosehydratschläuche auf ihrer Aussenseite mit einem Überzug auf Basis von Vinylidenchloridcopolymerisat zu versehen (US-A-2 961 323). Es ist ferner Stand der Technik, einen Film aus kristallinem Polypropylen mit einem Copolymerisat aus Vinylidenchlorid-Einheiten, Acrylnitril-Einheiten, Methacrylsäuremethylester-Einheiten und Itaconsäure-Einheiten zu versehen (US-A-3 353 991).

Ein bekannter Film von der im Oberbegriff des Anspruchs 1 genannten Art (US-A-3 108 017, Beispiel 1) besteht beispielsweise aus Cellulosehydrat und zeigt auf seiner Oberfläche 5 g/m² eines Überzugs eines Copolymerisats, welches zu 91,5% aus Vinylidenchlorid-Einheiten, zu 2,5% aus Acrylnitril-Einheiten, zu 5,5% aus Methacrylsäuremethylester-Einheiten und zu 0,5% aus Itaconsäure-Einheiten besteht. Diese Druckschrift enthält jedoch keine Angaben über die Viskosität dieses Copolymerisats in Lösung.

Die nach der bekannten Lehre hergestellten Filme und Schläuche haben insbesondere den Nachteil, dass der Polymerenüberzug bei der bestimmungsgemässen Verwendung der Filme und Schläuche als künstliche Wursthüllen keine ausreichende Sperrwirkung gegenüber Wasser, Wasserdampf sowie Sauerstoff bietet. Diese Überzüge können bei einer Umfangsdehnung von über 10% der beim Befüllen der Hüllen mit Wurstmasse bzw. bei der beim Kochen der Würste eintretenden Volumenvergrösserung des Füllguts auftretenden Dehnbeanspruchung der Schlauchhüllen nicht mehr standhalten, insbesondere, wenn die Überzüge gealtert sind. Sie werden dann in unerwünschter Weise durchlässig für Wasser, Wasserdampf sowie Sauerstoff. Durch Umfangsdehnung von bekannten Schlauchhüllen aus Cellulosehydrat mit dem bekannten Vinylidenchloridcopolymerisatüberzug um mehr als 10% — insbesondere nach Alterung der Schlauchhülle und daran anschliessender Umfangsdehnung derselben um 10% — wird die ursprüngliche Elastizität des Überzugs derart gemindert, dass dieser nach den genannten Massnahmen keine hinreichende Sperrschichtfunktion gegenüber dem Durchtritt von Wasser, Wasserdampf sowie Sauerstoff mehr aufweist. Der Einfluss der Umfangsdehnung der nicht gealterten und der gealterten Schlauchhülle im Bereich von 10 bis 35% auf diese Sperrwirkung ihres Filmüberzugs wird im Rahmen der Erfindungsbeschreibung definitionsgemäss demjenigen gleichgesetzt, der bei entsprechender Dehnung eines nicht gealterten bzw. gealterten selbsttragenden Films bezüglich seiner Sperrwirkung eintritt, wobei dieser selbsttragende Film aus Copolymerisat besteht, das in seinen chemischen und physikalischen Eigenschaften dem Copolymerisat des Filmüberzugs auf der Schlauchhüllenoberfläche entspricht.

Der Erfindung liegt deshalb die Aufgabe zugrunde, eine Schlauchhülle mit Lackfilmüberzug aus Vinylidenchloridcopolymerisat auf der Aussenseite vorzuschlagen, bei der der Filmüberzug auch noch in gealtertem Zustand der Schlauchhülle nach deren Umfangsdehnung (Radial-Dehnung) im Bereich von 10 bis 35% hinreichende Sperrschichtwirkung gegenüber dem Durchtritt von Wasser, Wasserdampf sowie Sauerstoff besitzt.

Die Bezeichnungen «Lackfilmüberzug» und «Filmüberzug» haben nachfolgend jeweils die gleiche Bedeutung.

Die der Erfindung zugrundeliegende Aufgabe wird gelöst durch die im Anspruch 1 angegebene schlauchförmige Verpackungshülle sowie durch das im Anspruch 8 genannte Verfahren. Die Unteransprüche betreffen bevorzugte Ausführungsformen.

Unter einem gealterten Lackfilmüberzug ist ein solcher zu verstehen, dessen physikalische Eigenschaften sich einstellen, wenn die Schlauchhülle, auf deren Aussenseite er angeordnet ist, unmittelbar nach Herstellung einer Lagerzeit von mindestens acht Wochen bei Raumtemperatur (ca. 20 bis 25°C) unterworfen wurde.

Der genannten Alterung der Schlauchhülle — auch Langzeitalterung genannt — entspricht in der ihre Eigenschaften bestimmenden Wirkung eine zeitlich auf 20 Stunden verkürzte Lagerung der Schlauchhülle bei erhöhter Temperatur von 40°C; diese wird auch als Wärmealterung bezeichnet.

In seinen physikalischen Eigenschaften entspricht der Filmüberzug auf der Schlauchhülle unmittelbar nach ihrer Herstellung denen eines selbsttragenden Films aus dem Filmüberzug im qualitativen und quantitativen chemischen Aufbau entsprechendem Copolymerisat.

Die physikalischen Parameter eines Copolymerisatfilmüberzugs einer gealterten Schlauchhülle entsprechen denen eines gealterten selbsttragenden Films, der aus Copolymerisat besteht, das bezüglich seines qualitativen und quantitativen chemischen Aufbaus dem entspricht, aus welchem der Copolymerisatfilmüberzug auf der gealterten Schlauchhülle besteht; dies gilt insbesondere für Filmüberzüge bzw. selbsttragende Filme, die nach Alterung im Bereich von 10 bis 35% Umfangsdehnung bzw. Dehnung unterworfen wurden.

Als praktisches Mass für hinreichende Sperrschichtfunktion des Lackfilmüberzugs auf der Schlauchhüllenaussenseite gegenüber dem Durchtritt von Wasser, Wasserdampf sowie Sauerstoff soll im Rahmen der Erfindungsbeschreibung definitionsgemäss gelten, wenn dieser dem Schlauch eine derart geringe Durchlässigkeit für Wasserdampf verleiht, dass die Schlauchhülle bei bestimmungsgemässer Verwendung als Wursthülle folgende Bedingungen erfüllt:

Durch vollständiges und dichtes Umhüllen von Wurstmasse — beispielsweise Leberwurstmasse mit einem Wassergehalt von ca. 30 bis 50 Gewichtsprozent, bezogen auf das Gesamtgewicht der Wurstmasse — mit erfindungsgemässer Schlauchhülle herstellbare Würste dürfen nach Lagerung derselben bei einer Temperatur im Bereich von 4 bis 7°C nicht mehr als 1% Wasser, bezogen auf das Gesamtgewicht der Wurst, pro Woche verlieren. Das Wurstgut darf innerhalb des genannten Zeitraums auch keine Verfärbung infolge Oxidation durch Sauerstoffeinwirkung aufweisen.

Der durch Wasserverlust eintretende Gewichtsverlust der Wurst wird durch Wägung ermittelt.

Die vorgenannte Bedingung ist jedenfalls erfüllt, wenn die erfindungsgemässe Schlauchhülle auch nach Alterung und anschliessender Umfangsdehnung im Bereich von 10 bis 35% Wasserdampfsperrwerte gemäss Tabelle 4 aufweist. Der Umfangsdehnung des Filmüberzugs (Radial-Dehnung) der Schlauchhülle entspricht prozentual gleichgrosse Dehnung eines Streifens aus selbsttragendem Film.

Als Mass für die physikalische Homogenität und Geschlossenheit des getemperten bzw. ungetemperten Filmüberzugs auf der Schlauchhüllenaussenseite nach Umfangsdehnung der Schlauchhülle im Bereich von 10 bis 35% kann auch der sogenannte «Blau-Test» dienen, der wie folgt an der Schlauchhülle durchgeführt wird: Ein 50 cm langes Schlauchstück vom Durchmesser 60 mm mit einer Wandstärke von 95 bis 105 µm entsprechend einem Flächengewicht von 95 bis 110 g/m², wird 20 Minuten in Wasser einer Temperatur von 20°C gelagert, dem Wasserbad entnommen und von anhaftendem Wasser befreit. Das eine Ende des Schlauchs wird durch Abbinden verschlossen. Das Schlauchstück wird dann durch Einblasen von Pressluft von 1,6 bar um ca. 15% umfänglich gedehnt. Danach lässt man auf die Schlauchaussenseite eine 0,5%ige wässrige Methylenblaulösung einwirken, beispielsweise dadurch, dass man die Schlauchaussenseite in diese Lösung eintaucht oder sie mit einem Pinsel aufträgt.

In gleicher Weise geht man mit einem zweiten Probestück desselben Schlauchs vor, der nach seiner Herstellung einer Wärmealterung unterworfen wurde, indem man ihn während einer Zeitdauer von 20 Stunden einer Temperatur von 40°C aussetzt. Das Schlauchstück mit gealtertem Filmüberzug auf seiner Aussenseite wird dann wie oben beschrieben weiterbehandelt.

An denjenigen Stellen des Filmüberzugs, die durch Überdehnung durchlässig für die Testflüssigkeit geworden sind, wird die unter dem Filmüberzug liegende Cellulosehydratträgerschicht blau angefärbt.

Die Blaufärbung der Schlauchprobestücke ist mittels Mikrodensitometermessung objektiv feststell- und mit anderen Probestücken vergleichbar. Die Blautest-Werte sind in Tabelle 1 angegeben:

Tabelle 1

«Blau-Test»

| Schlauchhüllen-proben | Densitometerwert | |
|---|---|---|
| | Probe ungetempert | Probe getempert 20 h bei 40°C |
| 1. Filmüberzug aus Copolymerisat nach Beispiel 1, nicht angefärbt | 1,0 | 1,0 |
| 2. Filmüberzug aus Copolymerisat nach Beispiel 1, angefärbt | 1,06 | 1,10 |

Der Filmüberzug auf der Schlauchhüllenaussenseite gilt dann als alterungsbeständig und seine Sperrschichtfunktion auch nach Alterung der Schlauchhülle als im wesentlichen unverändert gegenüber der des ungealterten Schlauchs, wenn die Blaufärbung der gealterten und im Bereich von 10 bis 35% umfangsgedehnten Schlauchhülle sich nicht von der ungealterten unterscheidet. In der Tabelle sind die entsprechenden Werte zusammengestellt.

Ein weiteres Kriterium für die Unversehrtheit des Filmüberzugs nach Umfangsdehnung der Schlauchhülle — insbesondere der Umfangsdehnung nach Alterung des Schlauchs — ist seine Sperrschichtwirkung gegenüber dem Durchtritt von Wasser, Wasserdampf sowie Sauerstoff — für die stellvertretend die an ihm ermittelte Wasserdampfdurchlässigkeit stehen soll.

Der erfindungsgemässe Schlauch besteht aus Cellulosehydrat, er ist bevorzugt faserverstärkt, wobei die Faserverstärkung vorteilhaft aus einem langfaserigen Papiervlies besteht, das als Matrix in die Schlauchwand eingelagert ist.

Die Herstellung von Cellulosehydratschläuchen sowie von faserverstärkten Cellulosehydratschläuchen ist bekannt.

Die erfindungsgemässe Schlauchhülle weist vorteilhaft eine haftvermittelnde Schicht aus synthetischem chemischem Material, beispielsweise kationischem Harz, auf, beispielsweise eine solche aus Melamin-Formaldehyd-Harz oder einem Harz auf Basis eines Reaktionsprodukts aus Epichlorhydrin mit einem Polyamin-Polyamid. Die haftvermittelnde Harzschicht ist zwischen Filmüberzug aus Copolymerisat und faserverstärkter Trägerschlauchhülle aus Cellulosehydrat angeordnet.

Cellulosehydratschläuche mit haftvermittelnder Zwischenschicht der genannten Art gehören zum Stand der Technik.

Der die Aussenseite der erfindungsgemässen Schlauchhülle bildende Lackfilmüberzug besteht aus synthetischem elastischem Copolymerisat aus 90 bis 92 Gewichtsprozent Vinylidenchlorid, 5,5 bis 7 Gewichtsprozent Acrylnitril, 1,5 bis 3,5 Gewichtsprozent Methacrylsäuremethylester und 0,5 bis 1,5 Gewichtsprozent Itaconsäure. Insbesondere bevorzugt besteht das Copolymerisat aus 91 Gewichtsprozent Vinylidenchlorid, 6,2 Gewichtsprozent Acrylnitril, 2,1 Gewichtsprozent Methacrylsäuremethylester und 0,7 Gewichtsprozent Itaconsäure. Die gewichtsprozentualen Angaben beziehen sich dabei jeweils auf das Gesamtgewicht des Copolymerisats, das herstellbar ist durch Copolymerisation eines Gemischs copolymerisierbarer Monomerer, das durch diejenigen Monomeren qualitativ charakterisiert ist, auf welche die das Copolymerisat bildenden, sich in diesem wiederholenden Molekularstruktureinheiten infolge Copolymerisation derselben zurückgehen.

Das Monomerengemisch enthält die Monomeren jeweils in gewichtsprozentualen Mengen, bezogen auf dessen Gesamtgewicht, die jeweils dem gewichtsprozentualen Anteil von Molekularstruktureinheiten des Copolymerisats entsprechen, die dessen chemischen Aufbau quantifizieren.

Die erfindungswesentlichen Eigenschaften des Copolymerisat-Filmüberzugs auf der Schlauchhüllenaussenseite sind durch dessen physikalisch-mechanische Kriterien sowie durch den molekular-strukturellen Aufbau des den Filmüberzug bildenden Copolymerisats bestimmt.

Die für das Eintreten des erfindungsgemäss angestrebten Erfolgs wesentliche physikalisch-mechanische Elastizitätscharakteristik des auf der Aussenseite der Schlauchhülle angeordneten Filmüberzugs aus Copolymerisat mit dem angegebenen qualitativen und quantitativen chemischen Aufbau stimmt mit der eines selbsttragenden Films überein, der aus Copolymerisat besteht, das dem den Filmüberzug auf der Schlauchhülle bildenden entspricht.

Ein wesentliches physikalisches Kriterium für den molekular-strukturellen Aufbau des den Filmüberzug bildenden Copolymerisats ist die Abhängigkeit der relativen Viskosität einer Copolymerisatlösung von der Konzentration des in ihr gelösten Copolymerisats.

Ein weiterer physikalischer Parameter, der den molekular-strukturellen Aufbau des den Filmüberzug bildenden Copolymerisats charakterisiert, ist die Abhängigkeit der relativen Viskosität der Copolymerisatlösung bestimmter Konzentration von der Temperatur.

Die Elastizität des Filmüberzugs auf der Schlauchhülle ist dadurch charakterisiert, dass er auch nach Alterung der Schlauchhülle einen E-Modul-Wert aufweist, der bei 4°C höchstens doppelt so gross ist wie der eines ungealterten mit 4° Celsius E-Modul-Wert von ca. 1200 N/mm².

Die durch genannte E-Modul-Charakteristik definierte Elastizität des Filmüberzugs auch bei niedriger Temperatur ist in Verbindung mit den besonderen von der Molekularstruktur abhängenden physikalischen Parametern (Viskositätskenndaten und Molekulargewichtsverteilung), die das den Filmüberzug bildende Copolymerisat individualisieren, Ursache dafür, dass die Sperrwirkung des Filmüberzugs gegenüber dem Durchtritt von Wasser, Wasserdampf sowie Sauerstoff auch nach Alterung der erfindungsgemässen Schlauchhülle und anschliessender Dehnung derselben im Bereich von 10 bis 35% in einem Masse aufrechterhalten bleibt, die für die bestimmungsgemässe Verwendung der Schlauchhülle Voraussetzung und daher erfindungsgemäss angestrebt ist.

Einem Filmüberzug mit dem genannten physikalischen Kennwert entspricht diesbezüglich ein selbsttragender Film, der aus Copolymerisat besteht, das bezüglich seines qualitativen und quantitativen chemischen Aufbaus und seiner inherent-physikalischen Kennwerte (Viskositätskenndaten) mit dem übereinstimmt, das den Filmüberzug der Schlauchhülle bildet.

Als selbsttragender Film soll ein solcher gelten, der aus einer Lacklösung herstellbar ist, die als gelösten filmbildenden Anteil Copolymerisat enthält, das bezüglich seines qualitativen und quantitativen chemischen Aufbaus sowie seiner physikalischen Kenndaten dem Copolymerisat entspricht, das den Filmüberzug auf der Schlauchhülle bildet. Zur Herstellung des selbsttragenden Films wird eine der beabsichtigten Dicke des selbsttragenden Films entsprechende Menge Copolymerisatlösung hinreichender Konzentration auf einer planen festen Unterlage, beispielsweise einer Glasplatte, ausgebreitet. Die Lacklösung wird dann zu einer gleichmässig dicken flüssigen Schicht egalisiert. Anschliessend wird das Lösungsmittel aus der flüssigen Schicht vertrieben und danach der selbsttragende Copolymerisatfilm von der als Unterlage für diesen dienenden Glasplatte abgezogen.

Der Filmüberzug auf der Aussenseite der Schlauchhülle ist physikalisch-mechanisch ferner dadurch charakterisiert, dass seine Sperrschichtwirkung gegenüber dem Durchtritt von Wasser, Wasserdampf sowie Sauerstoff auch nach Alterung der Schlauchhülle und anschliessender Umfangsdehnung derselben im Bereich von 10 bis 35% im wesentlichen unverändert gegenüber einem entsprechend gedehnten ungealterten ist.

Der Filmüberzug auf der Aussenseite der Schlauchhülle ist stofflich-chemisch dadurch individualisiert, dass das ihn bildende Copolymerisat aus 90 bis 92 Gewichtsprozent Vinylidenchlorid, 5,5 bis 7 Gewichtsprozent Acrylnitril, 1,5 bis 3,5 Gewichtsprozent Methacrylsäuremethylester und 0,5 bis 1,5 Gewichtsprozent Itaconsäure folgende in den Tabellen 2 und 3 angegebene, seine Molekularstruktur indivi-

dualisierende Viskositätscharakteristiken aufweist:

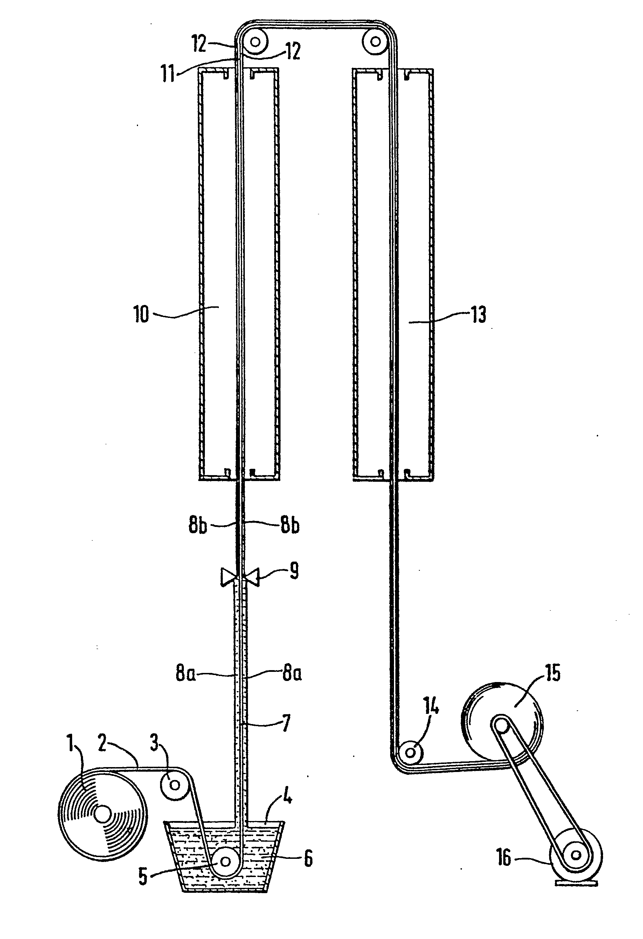

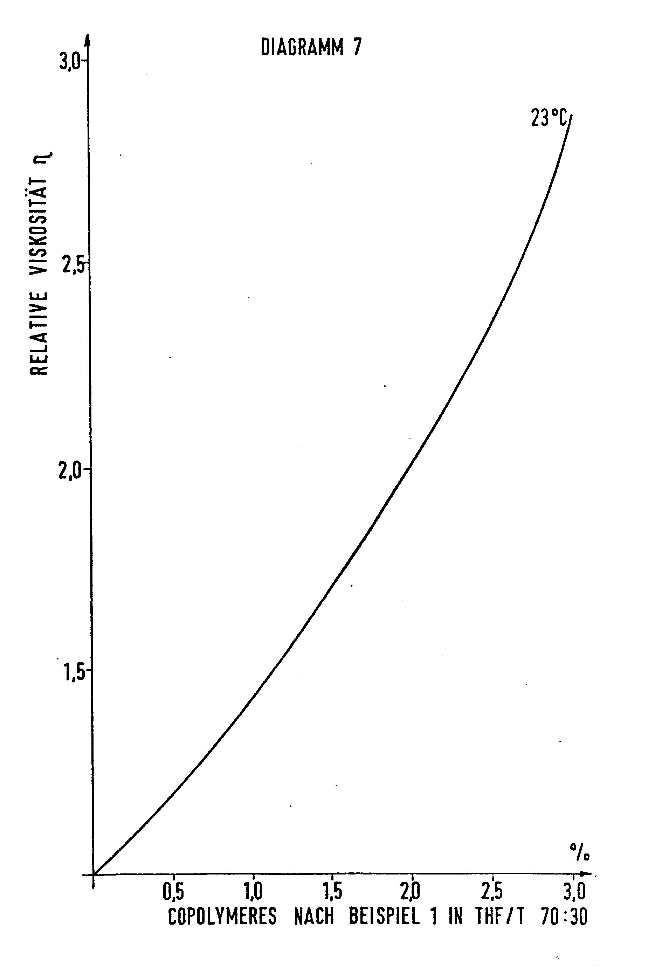

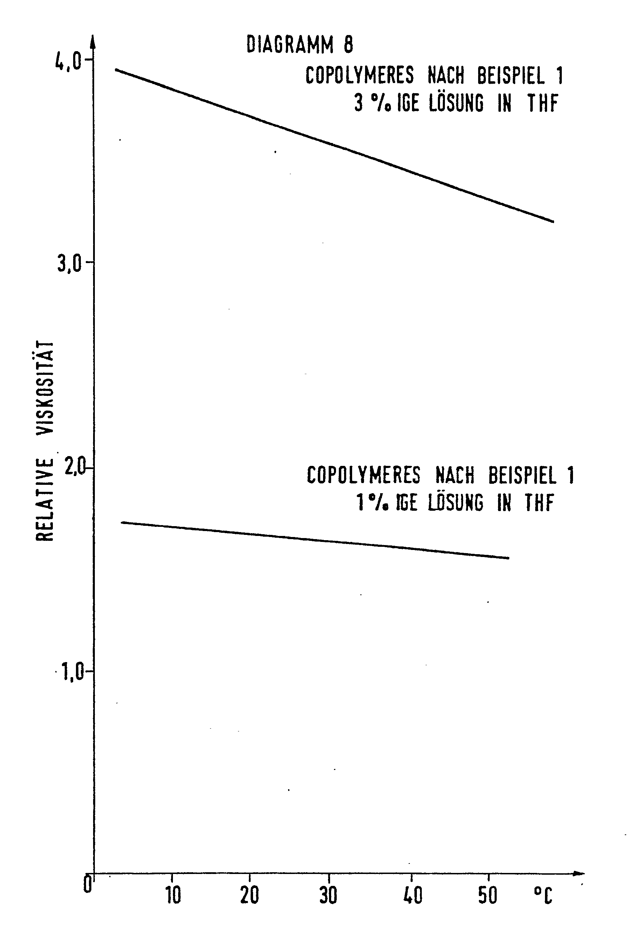

Tabelle 2 entsprechend Diagramm 7

Abhängigkeit der relativen Viskosität einer das den Filmüberzug bildende Copolymerisat enthaltenden Lösung von deren Konzentration:
Das Lösungsmittel besteht aus einem Gemisch aus Tetrahydrofuran und Toluol im Verhältnis 70 : 30.
Die Abhängigkeit wird durch folgende Wertepaare wiedergegeben:

| 1. Konzentration der Copolymerisatlösung Gew.-% | 2. Relative Viskosität der Copolymerisatlösung nach 1., gemessen bei 23°C ± 0,1 |
|---|---|
| 0,1 | 1,04 |
| 0,5 | 1,25 |
| 1,0 | 1,45 |
| 1,5 | 1,70 |
| 2,0 | 2,00 |
| 2,5 | 2,35 |
| 3,0 | 2,80 |

Der Gesamtverlauf der durch die Wertepaare gemäss Tabelle 2 bestimmten konkav gekrümmten Kurve gemäss Diagramm 7, welche die Abhängigkeit der spezifischen Viskosität einer das den Filmüberzug bildende Copolymerisat enthaltenden Lösung von deren jeweiliger Konzentration wiedergibt, soll definitionsgemäss repräsentiert werden durch die jeweiligen Anfangs- und Endwerte derselben.

Als konkave Kurve soll eine solche definiert werden, die dadurch charakterisiert ist, dass über ihren Gesamtverlauf bei ansteigender Copolymerisatkonzentration der Lösung die relative Viskosität jeweils zunimmt.

Tabelle 3 entsprechend Diagramm 8

Abhängigkeit der relativen Viskosität einer Lösung des Copolymerisats in Tetrahydrofuran von der Temperatur:

a) 1 gew.%ige Copolymerisatlösung

| Messtemperatur der Copolymerisatlösung | Relative Viskosität der Copolymerisatlösung |
|---|---|
| 5°C | 1,73 |
| 20°C | 1,66 |
| 35°C | 1,62 |
| 45°C | 1,58 |

b) 3 gew.%ige Copolymerisatlösung

| Messtemperatur der Copolymerisatlösung | Relative Viskosität der Copolymerisatlösung |
|---|---|
| 5°C | 3,92 |
| 20°C | 3,70 |
| 35°C | 3,50 |
| 45°C | 3,36 |

Der mittlere Polymerisationsgrad Pw (gewichtsmässig) des gemäss der Erfindung den Filmüberzug bildenden Copolymerisats beträgt 1030, der mittlere Polymerisationsgrad Pn (zahlenmässig) beträgt 455, die Uneinheitlichkeit des Polymeren Pw/Pn beträgt 2,3. Pw und Pn wurden durch gelchromatographische Fraktionierung an einer mit Styrogel gefüllten Trennsäule bei 45°C mit Tetrahydrofuran als mobiler Phase erhalten und auf Polystyrol als Eichsubstanz bezogen.

Die genannten Copolymerisate bilden den essentiellen Bestandteil des Filmüberzugs auf der Aussenseite der Schlauchhülle, er kann jedoch auch noch Füllstoffe, Weichmacher und/oder Wachse in Mengen enthalten, die die angestrebten Eigenschaften des Filmüberzugs nicht nachteilig beeinflussen. Filmüberzüge, die zusätzlich zum Copolymerisatanteil Wachs enthalten, umfassen dieses zu einem Anteil im Bereich von insgesamt 1 bis 5 Gewichtsprozent, bezogen auf das Gesamtgewicht des Überzugs.

Geeignete Wachse sind beispielsweise solche auf Basis veresterter Montansäuren, Polyolefinwachse sowie Wachse auf Oxazolinbasis.

Als chemisches Weichmachungsmittel für das den Überzug bildende Copolymerisat können Ester der Phthalsäure, der Zitronensäure, der Sebacinsäure, der Weinsäure sowie epoxidierte ungesättigte Fettsäureester Verwendung finden, die dann in einem Bereich von insgesamt 5 bis 15 Gewichtsprozent, bevorzugt 10 Gewichtsprozent, bezogen auf das Gesamtgewicht des Filmüberzugs eingesetzt werden. Enthält der Filmüberzug Füllstoff, beispielsweise Kaolin oder Kieselsäure, so ist dieser in einer Menge im Bereich von 0,5 bis 5 Gewichtsprozent in diesem, bezogen auf sein Gesamtgewicht, enthalten.

Der Filmüberzug hat eine Dicke, die einem Flächengewicht im Bereich von 3 bis 10 g/m² entspricht.

Die Durchführung des Verfahrens wird nachfolgend beispielhaft erläutert:
Von einer mit flachgelegtem faserverstärktem Schlauch aus Cellulosehydrat, der auf seiner Aussenseite eine haftvermittelnde Schicht aus chemischem Material, beispielsweise Melaminformaldehyd-Harz, aufweist, bewickelten Vorratsrolle wird dieser mit stetiger Geschwindigkeit abgezogen; der in längsaxialer Richtung mit gleichbleibender Geschwindigkeit, beispielsweise im Bereich von 20 bis 80 m/min, längsaxial fortbewegte flachliegende Schlauch wird dann teilweise um die Oberfläche einer oberhalb einer Wanne befestigt angeordneten, drehbar ausgebildeten ersten Umlenkwalze, deren Achse horizontal verläuft, geführt und — in Richtung der Schlauchfortbewegung — nach unten umgelenkt und in die mit Beschichtungslack gefüllte Wanne eingeführt.

In der Wanne ist drehbar ausgebildet und gelagert eine zweite Umlenkwalze befestigt angeordnet, deren horizontal verlaufende Achse unterhalb des Flüssigkeitsspiegels der Beschichtungslacklösung liegt, mit der die Wanne gefüllt ist, und um deren Oberfläche der Schlauch in flachgelegtem Zustand teilweise geschlungen und dann in Schlauchfortbewegungsrichtung vertikal nach oben geführt wird. Die Wanne ist dabei zur ersten Umlenkwalze in der Weise angeordnet, dass beide Umlenkwalzen achsparallel verlaufen.

Die flüssige Beschichtungslacklösung enthält insgesamt im Bereich zwischen 70 und 90 Gewichtsprozent, bevorzugt 80 Gewichtsprozent, flüchtiges, organisches Lösungsmittel oder Mischungen organischer Lösungsmittel. Der flüchtige flüssige Anteil der Beschichtungslacklösung besteht aus organischen Lösungsmitteln oder Lösungsmittelgemischen, in denen genannte Copolymerisate löslich sind, besonders vorteilhaft besteht er aus einem Gemisch aus Tetrahydrofuran und Toluol im Verhältnis 70 : 30. Die Lacklösung enthält gelöst 10 bis 30 Gewichtsprozent, bezogen auf ihr Gesamtgewicht, Copolymerisat, beispielsweise ein solches, das zu 91 Gewichtsprozent aus Vinylidenchlorid, zu 6,2 Gewichtsprozent aus Acrylnitril, zu 2,1 Gewichtsprozent aus Methacrylsäuremethylester und zu 0,7 Gewichtsprozent aus Itaconsäure besteht. Gegebenenfalls kann die Lösung Füllstoffe, chemische Weichmachungsmittel und Wachs enthalten.

Hinreichend weit oberhalb der Wanne ist eine Egalisierungseinrichtung zur Ausbildung einer gleichmässig dicken flüssigen Lackschicht auf der gesamten Aussenseite des vertikal geführten, flachliegenden Schlauchs vorgesehen. Die flüssige Lackschicht ist die Vorstufe für einen geschlossenen Filmüberzug, der aus dieser durch Vertreiben des flüchtigen Lösungsmittels entsteht. Die Egalisierungseinrichtung kann beispielsweise aus bekannten mechanischen Rakelmessern oder aus bekannten sogenannten Luftrakeln bestehen.

Nachdem auf der gesamten Schlauchaussenseite eine gleichmässig dicke flüssige Schicht aus Lacklösung ausgebreitet ist, lässt man Heissluft auf den Schlauch einwirken, die bewirkt, dass die flüchtigen Bestandteile der Lackschicht vertrieben werden und sich ein geschlossener Filmüberzug auf der Aussenseite des flachgelegten Schlauchs ausbildet.

Die Dicke der flüssigen Lackschicht wird dabei so eingestellt und die Konzentration der Lacklösung an gelöstem Copolymerisat derart gewählt, dass nach Trocknen derselben der gebildete Filmüberzug eine Dicke entsprechend einem Flächengewicht des Filmüberzugs im Bereich von 3 bis 10 $g/m^2$, bevorzugt 5 $g/m^2$, hat.

Die Trocknung der Lackschicht auf dem Schlauch kann beispielsweise dadurch erfolgen, dass man diesen durch einen mit Heissluft einer Temperatur im Bereich von 110 bis 130°C beschickten Trockentunnel hindurchführt.

Die Rekonditionierung des getrockneten Schlauchs zur Einstellung des Wassergehalts in der Trägerschicht des Schlauchs aus Cellulosehydrat auf ca. 8 bis 10 Gewichtsprozent, bezogen auf das Gewicht desselben, erfolgt beispielsweise dadurch, dass man den Schlauch durch einen weiteren Tunnel hindurchführt, der mit Heissluft einer Temperatur im Bereich von 80 bis 98°C betrieben ist, wobei die Heissluft mit Wasserdampf gesättigt ist.

Die Schlauchbefeuchtung wird dabei so geregelt, dass der Schlauch danach einen Wassergehalt im Bereich von 8 bis 10 Gewichtsprozent, bezogen auf sein Gesamtgewicht, aufweist. Der Beschichtungslack in der Wanne hat beispielsweise die zuvor angegebene Zusammensetzung.

Die Zeichnung erläutert die Verfahrensdurchführung beispielhaft.

In der Zeichnung bedeutet 1 die Vorratsrolle mit aufgewickeltem, flachliegendem, faserverstärktem Cellulosehydratschlauch 2 mit haftvermittelndem, chemischem Stoff auf seiner Oberfläche, 3 ist die erste Umlenkwalze, 4 eine Wanne mit zweiter Umlenkwalze 5. Es ist 6 Beschichtungslack in der Wanne, 7 ist der aus der Wanne 4 austretende flachliegende Schlauch mit flüssiger Schicht 8a aus Beschichtunglack auf seiner Aussenseite, 9 ist eine Rakeleinrichtung zum Einstellen der Lackschicht 8a auf eine vorbestimmte Dicke 8b, 10 ist ein Trockentunnel, 11 ist der Schlauch mit Filmüberzug 12 auf seiner Aussenseite, 13 ist der Rekonditionierungstunnel, 14 eine dritte drehbar ausgebildete Umlenkwalze und 15 eine Vorratsrolle zum Aufwickeln des auf seiner Aussenseite mit einem Filmüberzug versehenen Schlauchs.

Die Vorratsrolle 15 ist ebenso wie die Umlenkwalze 14 sowie die Umlenkwalze 3 vorteilhaft antreibbar ausgebildet und durch ein Antriebsmittel, beispielsweise einen Elektromotor 16, angetrieben.

Beispiel 1

Ein faserverstärkter Schlauch aus Cellulosehydrat mit einem Anteil von ca. 22 Gewichtsprozent Glycerin, bezogen auf das Gesamtgewicht des Schlauchs, als Weichmachungsmittel für Cellulosehydrat, der auf seiner Aussenseite eine Verankerungsschicht aus Melaminformaldehyd-Harz aufweist, wird fortlaufend auf seiner Aussenseite mit Beschichtungsflüssigkeit in Kontakt gebracht, indem man den zu beschichtenden Schlauch in flachgelegtem Zustand von einer Vorratsrolle abzieht, auf die er aufgewickelt ist, und dann in flachgelegtem Zustand mit stetiger Geschwindigkeit in längsaxialer Richtung durch Beschichtungsflüssigkeit hindurchführt, die sich in einer oben offenen Wanne befindet. Hinreichend weit oberhalb des Wannenbodens ist eine erste Umlenkwalze achsparallel zu diesem drehbar gelagert befestigt. Bei seiner Fortbewegung umschlingt der Schlauch die Umlenkwalze teilweise. Die flüssige Beschichtungslacklösung füllt die Wanne so weit, dass die Walze während der gesamten Verfahrensdauer in die Beschichtungsflüssigkeit ganz eintaucht.

Die Beschichtungslacklösung in der Wanne hat vorteilhaft eine Temperatur von 35°C. Die Beschichtungsflüssigkeit hat folgende Zusammensetzung: 400 Gewichtsteile eines Lösungsmittelgemischs aus 70 Volumenteilen Tetrahydrofuran und 30 Volumenteilen Toluol, in dem 100 Gewichtsteile eines Copolymerisats gelöst sind, das durch Copolymerisation eines Monomerengemischs herstellbar ist, das zu 91 Gewichtsprozent aus Vinylidenchlorid, zu 6,2 Gewichtsprozent aus Acrylnitril, zu 2,1 Gewichtsprozent aus Methacrylsäuremethylester und zu 0,7 Gewichtsprozent aus Itaconsäure, jeweils bezogen auf das Gesamtgewicht der Monomerenmischung, besteht. Das Copolymerisat ist zur Bildung eines selbsttragenden Films befähigt, der unmittelbar nach seiner Herstellung einen an ihm ermittelten E-Modul-Wert von ca. 1200 N/mm² aufweist und nach Alterung (Lagerung des Films 20 Stunden bei 40°C) einen E-Modul-Wert von ca. 2400 N/mm² aufweist. Der molekular-strukturelle Aufbau des Copolymerisats, der Ausdruck findet in der Abhängigkeit der spezifischen Viskosität einer Lösung, die das den Filmüberzug bildende Copolymerisat gelöst enthält, von der Konzentration des Gelösten sowie in der Abhängigkeit der spezifischen Viskosität von der Temperatur einer das den Filmüberzug bildende Copolymerisat enthaltenden 1 gew.%igen bzw. 3 gew.%igen Lösung, ist charakterisiert durch die Kennwerte in den Tabellen 2 und 3.

Die Lösung enthält zusätzlich als gelöste Anteile 3 Gewichtsteile Wachs und 1 Gewichtsteil hydrophobiertes Kaolin.

Der flachgelegte Schlauch wird mit stetiger Geschwindigkeit durch die Beschichtungsflüssigkeit hindurchgeführt.

Nach Durchlaufen der sich in der Wanne befindlichen Beschichtungsflüssigkeit wird er nach Umlenkung mittels einer zweiten Umlenkwalze in der Wanne vertikal und in Richtung von unten nach oben weitergeführt. Die flüssige Schicht auf der Aussenseite des flachgelegten Schlauchs wird dann in an sich bekannter Weise mit bekannten Vorrichtungen, beispielsweise sogenannten «Doctor-Walzen» auf eine solche Stärke egalisiert, dass der Filmüberzug auf der Schlauchaussenseite nach Vertreiben der flüchtigen Mittel in der Schicht einem Flächengewicht von 5 g Copolymerem pro m² entspricht.

Nach der Egalisierung der flüssigen Schicht aus Lacklösung auf der Aussenseite des Schlauchs wird dieser in flachgelegtem Zustand, weiterhin vertikal verlaufend, der Einwirkung von Wärme unterworfen, die die Trocknung der Schicht auf der Aussenseite des Schlauchs bewirkt; dies erfolgt beispielsweise dadurch, dass man den Schlauch durch einen Trockentunnel hindurchführt, der mit Heissluft einer Temperatur von ca. 115°C betrieben wird. Nach der Ausbildung eines geschlossenen Filmüberzugs auf der Aussenseite des Schlauchs durch die Wärmeeinwirkung im Trockner wird der Schlauch dann rekonditioniert und dabei auf einen Wassergehalt von ca. 8 bis 10 Gewichtsprozent, bezogen auf sein Gesamtgewicht, gebracht. Dies erfolgt beispielsweise dadurch, dass man den Schlauch durch einen Tunnel hindurchführt, der mit 80 bis 98°C heisser, mit Wasserdampf gesättigter Luft beschickt ist.

Ein hinreichend lang bemessenes Stück der hergestellten Schlauchhülle wird in bekannter Weise mit Wurstmasse, beispielsweise Leberwurstmasse — Wassergehalt ca. 50 Gewichtsprozent, bezogen auf das Gesamtgewicht der Masse —, gefüllt und beidseitig fest verschlossen.

Beim Füllvorgang wird die Wursthülle eines Kalibers 60 — Wandstärke der Hülle: 0,097 mm — um ca. 10 bis 25% umfangsgedehnt.

Nach 8tägiger Lagerung der Leberwurst im Kühlraum bei einer Temperatur im Bereich von 0 bis 7°C zeigt die in der Schlauchhülle eingeschlossene Wurstmasse einen Wasserverlust von < 1% sowie keine Verfärbung infolge unerwünschten Luftzutritts zu dieser.

Ein zu einem Folienwickel aufgerollter Schlauch nach dem Beispiel verklebt nicht auf der Rolle. Der Filmüberzug auf der Darmaussenseite ist mit dem Schlauch derartig fest verbunden, dass er sich auch nach 20stündigem Kochen in Wasser nicht von seiner Unterlage löst.

Der nach dem Beispiel hergestellte Schlauch lässt sich selbst unter tropischen Bedingungen (40°C; 85% relative Luftfeuchte) längere Zeit lagern, ohne dass Beschädigungen des Filmüberzugs nach seiner Befüllung mit Wurstmasse auftreten.

Beispiel 2

Wie Beispiel 1, jedoch mit der Abwandlung, dass die zur Herstellung des Filmüberzugs verwendete Lösung zusätzlich 10 Gewichtsteile Dibutylphthalat als Weichmachungsmittel enthält.

Die nach Beispiel 2 hergestellte Beschichtung ist noch geschmeidiger als die gemäss Beispiel 1.

Beispiel 3

Wie Beispiel 1, jedoch mit der Abwandlung, dass die Beschichtungslösung zusätzlich 10 Gewichtsteile Acetyltributylcitrat als Weichmachungsmittel enthält und dass anstatt des Esterwachses Hartparaffin vom Schmelzpunkt 60 bis 62°C verwendet wird.

**Beispiel 4**

Wie Beispiel 1, jedoch mit der Abwandlung, dass die Beschichtungsflüssigkeit zusätzlich 5 Gewichtsteile Diisobutyltartrat als Weichmachungsmittel für das synthetische Copolymerisat enthält.

**Beispiel 5**

Wie Beispiel 1, jedoch mit der Abwandlung, dass anstatt Esterwachs Polyäthylenwachs Verwendung findet. Die nach Beispiel 5 hergestellten Schläuche zeichnen sich dadurch aus, dass der Filmüberzug Mattierungseffekt zeigt.

**Beispiel 6**

Wie Beispiel 1, jedoch mit der Abwandlung, dass als Füllstoff anstatt Kaolin Kieselsäure mit einer durchschnittlichen Korngrösse von 3 μm verwendet wird.

Der E-Modul-Wert eines dem Filmüberzug auf der Aussenseite der nach Beispiel 1 hergestellten Schlauchhülle entsprechenden Films — vor sowie nach Alterung desselben ermittelt — wird an einem solchen einer Stärke von ca. 25 μm gemessen, der wie folgt herstellbar ist:

Man stellt eine 20 gewichtsprozentige Lösung eines dem Filmüberzug auf der Schlauchhüllenaussenseite entsprechenden Copolymerisats gemäss Beispiel 1 in einem Lösungsmittelgemisch aus Tetrahydrofuran und Toluol im Verhältnis 70 : 30 her. Diese Lacklösung wird auf eine Glasplatte aufgetragen und mit Hilfe eines sogenannten Filmziehgeräts zu einem flüssigen Überzug einer Stärke von ca. 125 μm egalisiert und auf der Glasplatte ausgebreitet.

Man unterwirft dann zur Vertreibung des Lösungsmittels den flüssigen Lackfilm auf der Oberfläche der Glasplatte während einer Zeitdauer von 10 Minuten der Einwirkung von Wärme einer Temperatur von 120°C. Der Copolymerisatfilm wird dann nach Eintauchen der Glasplatte in ein Wasserbad von dieser abgezogen und unmittelbar danach in noch wasserbenetztem Zustand in Streifen von jeweils 100 mm Länge und 20 mm Breite geschnitten. Die Messstreifen aus selbsttragendem Copolymerisatfilm haben eine Dicke von 25 μm. Die Messstreifen werden durch Abtupfen mit Löschpapier von anhaftendem Wasser befreit.

Der E-Modul des Copolymerisatfilms wird jeweils an einem ungealterten und einem gealterten (20 h/40°C) Testfilmstück einer Dicke von 25 μm ermittelt.

Die Messung der relativen Viskosität des den Filmüberzug nach Beispiel 1 bildenden Copolymerisats erfolgt nach der von Ubbelohde angegebenen Methode.

Die ermittelten Viskositätskenndaten des den Filmüberzug bildenden Copolymerisats nach Beispiel 1 sind aus den Tabellen 2 und 3 ersichtlich.

Filmüberzüge aus Copolymerisat auf der Aussenseite erfindungsgemässer Schlauchhüllen, die einen nach Alterung ermittelten E-Modul-Wert aufweisen, der mehr als 100% grösser ist als der eines ungealterten Überzugs, sind erfindungsgemäss ungeeignet, da die Gefahr besteht, dass bei Umfangsdehnung des gealterten Schlauchs im Bereich von 10 bis 35% Beschädigung des Filmüberzugs eintritt. Infolge der Beschädigung des Filmüberzugs weist dieser dann für den beabsichtigten Verwendungszweck der erfindungsgemässen Schlauchhülle nicht ausreichende Sperrwirkung gegenüber dem Durchtritt von Wasser, Wasserdampf sowie Sauerstoff auf.

Die die Sperrschichtwirkung des Filmüberzugs charakterisierenden «Wasserverlust»-Werte eines Schlauchs nach der Erfindung in ungetempertem Zustand nach 4- bzw. 20stündiger Lagerung des Schlauchs bzw. die eines 20 Stunden bei 40°C getemperten sind in Tabelle 4 angegeben:

Tabelle 4

| | % Wasserverlust * einer | |
|---|---|---|
| | a) ungetemperten Schlauchhülle | b) 20 h bei 40°C getemperten Schlauchhülle |
| Filmüberzug aus Copolymerisat nach Beispiel 1 | 50 g/m² · 24 h | 60 g/m² · 24 h |

\* ermittelt an nach a) bzw. b) behandelten Hüllen jeweils nach 20stündiger Lagerung bei 39°C

Die in der Tabelle 4 angegebenen Werte sind an folgenden Prüfkörpern ermittelt:

Ein 50 cm langes Stück eines nach Beispiel 1 hergestellten Schlauchs mit Innendurchmesser 60 mm und einer Gesamtwanddicke entsprechend einem Flächengewicht von 95 bis 100 g/m² wird 20 Minuten in Wasser von 20°C gelagert. Danach wird das eine Schlauchende durch Abbinden fest verschlossen und der Schlauch durch die andere Öffnung mit Pressluft von 1,6 bar aufgeblasen und dabei um 10 bis 15% umfangsgedehnt.

In das umfangsgedehnte Probestück der Schlauchhülle wird dann ein wassergesättigtes Cellulosehydrat-Schwammtuch (Abmessung 25 × 25 cm) eingelegt, das ein Gesamtgewicht im Bereich von 100 bis 140 g hat.

Die Schlauchhülle wird dann an beiden Enden dicht verschlossen. Die mit dem wasserhaltigen Schwammtuch gefüllte Schlauchpackung wird dann in einem Trockenschrank bei 39°C gelagert und ihre Gewichtsabnahme (durch Wasserverlust infolge Verdunsten von Wasserdampf durch die Schlauchwand nach aussen) nach 4 bzw. 20 Stunden durch Auswiegen des Schlauchs ermittelt. Die ermittelten Werte werden auf 1 m² Schlauchfläche umgerechnet.

In einer zweiten Versuchsserie wird eine mehrwöchige Lagerzeit des Schlauchs bei 20°C vor bestimmungsgemässer Verwendung, d.h.

Wässern und anschliessendem Befüllen mit Wurstmasse unter Pressdruck, dadurch simuliert, dass man den nach Beispiel 1 hergestellten Schlauch zunächst 20 Stunden bei 40°C im Trockenschrank lagert (tempert). Ein derart getemperter Schlauch wird nach Abkühlen auf Raumtemperatur dann in der vorbeschriebenen Weise weiterbehandelt und die Wasserverlustwerte ermittelt.

Die Testergebnisse lassen eine Aussage über die Wasserdampfdichtigkeit der Filmüberzüge auf den Aussenseiten der Prüfkörper zu.

Den Tabellen 5 und 6 ist die in Prozent angegebene Dehnbarkeit des wie angegeben herstellbaren selbsttragenden Films aus Copolymerisat gemäss Beispiel 1 entnehmbar:

Tabelle 5

Dehnbarkeit * von Filmen aus Copolymerisat entsprechend dem den Filmüberzug nach Beispiel 1 bildenden

|  | ungealterter | gealterter (20 h/40°C) |
|---|---|---|
| gemessen bei 23°C | 220% | 35% |

Tabelle 6

Dehnbarkeit * eines 10 Gew.-% Dibutylphthalat enthaltenden Films aus Copolymerisat entsprechend dem den Filmüberzug nach Beispiel 1 bildenden

|  | ungealterter | gealterter (20 h/40°C) |
|---|---|---|
| gemessen bei 23°C | 250% | 200% |
| gemessen bei 4°C | 40% | 30% |

* Die Dehnbarkeit der Filmprobe in Prozent gibt deren auf die Ausgangslänge bezogene einaxiale Längenveränderung an.

Die auf die Ausgangsabmessung des selbsttragenden Copolymerisatfilms bezogene Dehnbarkeit (Dehnung) desselben gibt die Dehnungsgrenze an, bis zu welcher er dehnbar ist unter Aufrechterhaltung einer Sperrschichtfunktion gegenüber dem Durchtritt von Wasser, Wasserdampf sowie Sauerstoff, die für den Verwendungszweck der Verpackungshülle hinreicht.

Die in Prozent angegebene Dehnungsgrenze des selbsttragenden Films entspricht der eines Filmüberzugs auf der Schlauchhüllenaussenseite, der aus demselben Copolymerisat besteht wie der selbsttragende Film bei entsprechender Dehnung der Schlauchhülle in Umfangsrichtung.

**Patentansprüche**

1. Schlauchförmige vorzugsweise faserverstärkte Verpackungshülle auf Basis von Cellulosehydrat, die auf ihrer Aussenseite einen wasserdampf-, wasser- sowie sauerstoffundurchlässigen Filmüberzug mit einer Dicke entsprechend einem Flächengewicht im Bereich zwischen 3 und 10 g/m², vorzugsweise 5 g/m² aufweist, wobei der Filmüberzug ein Copolymerisat enthält, das zu 90 bis 92 Gew.-% aus Vinylidenchlorid und der Rest aus Acrylnitril-, Methacrylsäuremethylester- und Itaconsäure-Einheiten besteht, dadurch gekennzeichnet, dass der Filmüberzug aus Copolymerisat aus 90 bis 92 Gew.-% Vinylidenchlorid, 5,5 bis 7 Gew.-% Acrylnitril, 1,5 bis 3,5 Gew.-% Methacrylsäuremethylester und 0,5 bis 1,5 Gew.-% Itaconsäure besteht, wobei die gewichtsprozentualen Angaben sich jeweils auf das Gesamtgewicht des Copolymerisats beziehen, dessen 0,1 gewichtsprozentige Lösung in einer Mischung aus Tetrahydrofuran und Toluol im Verhältnis 70 : 30, gemessen bei 23°C, eine relative Viskosität von 1,04 und dessen 3 gewichtsprozentige Lösung in einer Mischung aus Tetrahydrofuran und Toluol im Verhältnis 70 : 30, gemessen bei 23°C, eine relative Viskosität von 2,8 aufweist, und der bei 4°C gemessene E-Modul-Wert des Filmüberzugs der gealterten Schlauchhülle höchstens doppelt so gross ist wie der der ungealterten mit einem Wert von ca. 1200 N/mm², wobei er auch nach Alterung und anschliessender Umfangsdehnung der Schlauchhülle von im Bereich von 10 bis 35% für den Verwendungszweck hinreichende Sperrschichtfunktion gegenüber dem Durchtritt von Wasser, Wasserdampf sowie Sauerstoff hat.

2. Verpackungshülle nach Anspruch 1, dadurch gekennzeichnet, dass das Copolymerisat ein solches ist, das durch Copolymerisation eines Monomerengemischs entsteht, das zu 91 Gew.-% aus Vinylidenchlorid, zu 6,2 Gew.-% aus Acrylnitril, zu 2,1 Gew.-% aus Methacrylsäuremethylester und zu 0,7 Gew.-% aus Itaconsäure, jeweils bezogen auf das Gewicht des Monomerengemischs, besteht.

3. Verpackungshülle nach Anspruch 1 oder 2, dadurch gekennzeichnet, dass der Überzug zusätzlich insgesamt 1 bis 5 Gew.-% Wachs auf Basis veresterter Montansäure, Polyolefinwachs, Paraffinwachs und/oder Oxazolinwachs oder Polyäthylenwachs enthält.

4. Verpackungshülle nach einem der Ansprüche 1 bis 3, dadurch gekennzeichnet, dass der Überzug 0,5 bis 5 Gew.-% anorganisches Gleitmittel, wie Kaolin, hydrophobiertes Kaolin oder Kieselsäure, enthält.

5. Verpackungshülle nach Anspruch 4, dadurch gekennzeichnet, dass das anorganische Gleitmittel eine mittlere Korngrösse von 1 bis 3 μm aufweist.

6. Verpackungshülle nach einem der Ansprüche 1 bis 5, dadurch gekennzeichnet, dass der Überzug insgesamt 5 bis 15 Gew.-% Weichmachungsmittel, bevorzugt Dibutylphthalat, Acetyltributylcitrat, Diisobutyltartrat oder epoxidierte ungesättigte Fettsäureester, enthält.

7. Verwendung einer Verpackungshülle nach einem der Ansprüche 1 bis 6 als Packhülle für Wurstmasse, insbesondere für Koch- und Brühwurst.

8. Verfahren zur Herstellung von schlauchförmigen Verpackungshüllen nach einem der Ansprüche 1 bis 6, bei dem man von einer Vorratsrolle einen flachgelegten, insbesondere faserverstärkten, Schlauch auf Basis von Cellulosehydrat fortlaufend abzieht und auf die Aussenseite des flachgelegten, mit gleichbleibender Geschwindigkeit längsaxial vertikal in Richtung von unten nach oben fortbewegten Schlauchs organische, flüssige Lacklösung aufbringt, die Lackschicht egalisiert und zu einem Filmüberzug trocknet, wobei der Filmüberzug ein Copolymerisat nach Anspruch 1 oder 2 und gegebenenfalls die in den Ansprüchen 3 bis 6 genannten Wachse, Gleitmittel und/oder Weichmachungsmittel enthält.

9. Verfahren nach Anspruch 8, dadurch gekennzeichnet, dass die Lacklösung flüssigen, flüchtigen Anteil im Bereich von 70 bis 90 Gew.-%, vorteilhaft 80 Gew.%, bezogen auf das Gesamtgewicht der Lacklösung, enthält.

10. Verfahren nach Anspruch 8 oder 9, dadurch gekennzeichnet, dass der flüchtige Anteil der Lacklösung aus einem Gemisch von Tetrahydrofuran und Toluol im Verhältnis von 70 : 30 besteht.

## Claims

1. A tubular, preferably fiber-reinforced packaging skin based on cellulose hydrate and having on its outside a film coating which is impervious to water vapor, water and oxygen and possesses a thickness corresponding to a weight per unit area in the range between 3 and 10 $g/m^2$, preferably 5 $g/m^2$, and contains a copolymer which consists of 90 to 92 percent by weight of vinylidene chloride, while the remaining portion consists of units of acrylonitrile, methyl methacrylate and itaconic acid, characterized in that the film coating of a copolymer consists of 90 to 92 percent by weight of vinylidene chloride, 5.5 to 7 percent by weight of acrylonitrile, 1.5 to 3.5 percent by weight of methyl methacrylate and 0.5 to 1,5 percent by weight of itaconic acid, the data on the percentages by weight relating in each case to the total weight of the copolymer which has a relative viscosity of 1.04, measured at 23°C in a 0.1 percent strength by weight solution in a mixture of tetrahydrofuran and toluene in the ratio of 70 : 30, and a relative viscosity of 2.8, measured at 23°C in a 3 percent strength by weight solution in a mixture of tetrahydrofuran and toluene in the ratio of 70 : 30, the value of the modulus of elasticity, measured at 4°C, of the film coating of the aged tubing skin being at most twice that of the unaged film coating having a value of approximately 1,200 $N/mm^2$, and the film coating layer having a barrier function, adequate for the intended purpose, against the permeation of water, water vapor and oxygen even after ageing and subsequent circumferential extension of the tubing skin in the range from 10 to 35%.

2. Packaging skin as claimed in claim 1, which comprises a copolymer of a type which is formed by copolymerization of a mixture of monomers consisting to the extent of 91 percent by weight of vinylidene chloride, to the extent of 6.2 percent by weight of acrylonitrile, to the extent of 2.1 percent by weight of methyl methacrylate and to the extent of 0.7 percent by weight of itaconic acid, in each case relative to the weight of the mixture of monomers.

3. Packaging skin as claimed in claim 1 or 2, wherein the coating additionally contains a total of 1 to 5 percent by weight of a wax based on esterified montanic acid, polyolefin wax, paraffin wax and/or oxazoline wax or polyethylen wax.

4. Packaging skin as claimed in any of claims 1 to 3, whereein the coating contains 0.5 to 5 percent by weight of an inorganic slip agent, such as kaolin, kaolin which has been rendered hydrophobic or silica.

5. Packaging skin as claimed in claim 4, wherein the inorganic slip agent has a mean particle size of 1 to 3 µm.

6. Packaging skin as claimed in any of claims 1 to 5, wherein the coating contains a total of 5 to 15 percent by weight of a plasticizer, preferably dibutyl phthalate, tributyl acetylcitrate, diisobutyl tartrate or epoxidized unsaturated fatty acid esters.

7. The use of a packaging skin as claimed in any of claims 1 to 6 as a packaging skin for sausage-meat, in particular for sausages prepared from precooked or raw meat.

8. A process for the manufacture of tubular packaging skins as claimed in any of claims 1 to 6, which comprises continuously drawing a flattened, in particular fiber-reinforced tubing based on cellulose hydrate from a stock roll and applying an organic liquid lacquer solution to the outside of the flattened tubing which is moving forward vertically upwards along the longitudinal axis at a constant speed, levelling the lacquer layer and drying it to give a film coating which consists of a copolymer according to claim 1 or 2 and optionally contains the waxes, slip agents and/or plasticizers mentioned in claims 3 to 6.

9. A process as claimed in claim 8, wherein the lacquer solution contains a liquid, volatile portion in the range from 70 to 90 percent by weight, advantageously 80 percent by weight, relative to the total weight of the lacquer solution.

10. A process as claimed in claim 8 or 9, wherein the volatile portion of the lacquer solution consists of a mixture of tetrahydrofuran and toluene in the ratio of 70 : 30.

## Revendications

1. Enveloppe d'emballage tubulaire à base d'hydrate de cellulose, de préférence renforcée de fibres, présentant à l'extérieur un film de revêtement imperméable à la vapeur d'eau, à l'eau et à l'oxygène d'une épaisseur correspondant à un poids compris entre 3 et 10 g/m², de préférence de 5 g/m², ce film de revêtement contenant un produit de copolymérisation formé de 90 à 92% en poids de chlorure de vinylidène, le reste étant formé d'unités d'acrylonitrile, de méthacrylate de méthyle et d'acide itaconique, caractérisée en ce que le film de revêtement est formé d'un produit de copolymérisation comprenant entre 90 et 92% en poids de chlorure de vinylidène, entre 5,5 et 7% en poids d'acrylonitrile, entre 1,5 et 3,5% en poids de méthacrylate de méthyle et entre 0,5 et 1,5% en poids d'acide itaconique, les indications de pourcentage en poids se rapportant chaque fois au poids total du produit de copolymérisation, dont la solution à 0,1% en poids dans un mélange de tétrahydrofuranne et de toluène en un rapport de 70 : 30 présente une viscosité relative de 1,04 mesurée à 23°C et dont la solution à 3% en poids dans un mélange de tétrahydrofuranne et de toluène en un rapport de 70 : 30, présente une viscosité relative de 2,8 mesurée à 23°C, en ce que la valeur du module E du film de revêtement de l'envelope tubulaire vieillie, mesuré à 4°C, est au maximum le double de la valeur du module de l'enveloppe non vieillie, et s'élève à environ 1200 N/m² et en ce que même après un vieillissement suivi d'un allongement circonférentiel de l'enveloppe tubulaire de 10 à 35%, elle présente une fonction de couche d'arrêt suffisante pour son application envisagée, vis-à-vis du passage de l'eau, de la vapeur d'eau et de l'oxygène.

2. Enveloppe d'emballage selon la revendication 1, caractérisée en ce que le produit de copolymérisation est un produit que l'on obtient en copolymérisant un mélange de monomères composé de 91% en poids de chlorure de vinylidène, 6,2% en poids d'acrylonitrile, 2,1% en poids de méthacrylate de méthyle et 0,7% en poids d'acide itaconique, chaque fois relativement au poids du mélange de monomères.

3. Enveloppe d'emballage selon la revendication 1 ou 2, caractérisée en ce que le revêtement contient en outre, au total, 1 à 5% en poids de cire à base d'acide montanique estérifié, de cire de polyoléfine, de cire de paraffine et/ou de cire d'oxazoline ou de cire de polyéthylène.

4. Enveloppe d'emballage selon l'une quelconque des revendications 1 à 3, caractérisée par le fait que le revêtement contient 0,5 à 5% en poids d'une matière de charge minérale telle que le kaolin, le kaolin hydrofugé ou l'acide silicique.

5. Enveloppe d'emballage selon la revendication 4, caractérisée en ce que la matière de charge minérale présente une grosseur moyenne de grain comprise entre 1 et 3 µm.

6. Enveloppe d'emballage selon l'une quelconque des revendications 1 à 5, caractérisée en ce que le revêtement contient au total 5 a 15% en poids de plastifiant, de préférence de phtalate de dibutyle, de tributylcitrate d'acétyle, de tartrate de diisobutyle ou d'esters d'acide gras insaturés époxydés.

7. Application d'une enveloppe d'emballage selon l'une quelconque des revendications 1 à 6 comme boyau de saucisse, en particulier pour saucisse à cuire et à ébouillanter.

8. Procédé de fabrication d'enveloppes d'emballage tubulaires selon l'une quelconque des revendications 1 à 6, caractérisé en ce que l'on retire continuellement d'une bobine de réserve une enveloppe à base d'hydrate de cellulose aplatie, en particulier renforée de fibres, on applique à l'extérieur de cette enveloppe aplatie, déplacée verticalement en direction axiale longitudinale de bas en haut à une vitesse constante, une solution liquide organique de vernis, on égalise la couche de vernis et on la sèche pour obtenir un film de revêtement, celui-ci contenant un produit de copolymérisation selon l'une quelconque des revendications 1 et 2 et éventuellement les cires, lubrifiants et/ou plastifiants cités dans les revendications 3 à 6.

9. Procédé selon la revendication 8, caractérisé en ce que la solution de vernis contient une fraction liquide volatile comprise entre 70 et 90% en poids, avantageusement de 80% en poids, relativement au poids total de la solution de vernis.

10. Procédé selon l'une quelconque des revendications 8 et 9, caractérisé en ce que la fraction volatile de la solution de vernis est formée d'un mélange de tétrahydrofuranne et de toluène en un rapport de 70 : 30.

DIAGRAMM 7

DIAGRAMM 8

COPOLYMERES NACH BEISPIEL 1
3 % IGE LÖSUNG IN THF

COPOLYMERES NACH BEISPIEL 1
1% IGE LÖSUNG IN THF

RELATIVE VISKOSITÄT